# EUROPEAN PATENT APPLICATION

(11) **EP 3 442 115 A1**
(43) Date of publication of application: **13.02.2019**
(21) Application number: 17889533.0
(22) Date of filing: 28.11.2017
(51) Int. Cl.: H02S 20/22

(54) **SLIDE-IN TRACK FOR SUPPORTING PHOTOVOLTAIC MODULE AND MOUNTING ASSEMBLY FOR PHOTOVOLTAIC MODULE**

(30) Priority: 09.06.2017 CN 201720668024 U
(71) Applicant: Beijing Apollo Ding Rong Solar Technology Co. Ltd., Beijing 100176 (CN)
(72) Inventor: LIN, Junrong, Beijing 100176 (CN)
(74) Representative: Cabinet Beau de Loménie
(86) International application number: PCT/CN2017/113236
(87) International publication number: WO 2018/223623

(57) **Abstract**

An embodiment of the present disclosure discloses a slide-in rail for supporting a photovoltaic module and a mounting assembly of the photovoltaic module. The slide-in rail includes: a fixing part and a clamping part. The clamping part includes: a vertical plate, whose bottom end is fixed to a top surface of the fixing part; and a transverse plate, transversely fixed to a top end of the vertical plate. The transverse plate, the vertical plate and the top surface of the fixing part form a pair of clip slots opposite in open direction. The clip slot is used for clipping to the photovoltaic module. In the slide-in rail for supporting a photovoltaic module and the mounting assembly of the photovoltaic module disclosed by the embodiment of the present disclosure, a clip slot is formed by the transverse plate and the vertical plate on the fixing part. The photovoltaic module may be directly mounted by way of cooperation between the clip slot and the photovoltaic module. The clip slot may limit the photovoltaic module. Therefore, the mounting time is saved. Furthermore, in the mounting process, it is unnecessary to apply excessive force to the photovoltaic module, and thus fracture of the photovoltaic module may be avoided.

## Description

### TECHNICAL FIELD

An embodiment of the present disclosure relates to a solar photovoltaic module, and more particularly, to a slide-in rail for supporting a photovoltaic module and a mounting assembly of the photovoltaic module.

### BACKGROUND

With the continuous development of new energy technologies, solar energy provides a more convenient energy supply for people. Photovoltaic modules are important compositions of a solar power generation system. The photovoltaic modules in the prior art are typically fixed to roofs or exterior walls of buildings by fixtures. Specifically, the fixtures are first fixed to the roofs or the exterior walls, then rails are fixed to the fixtures, and then the rails and the fixtures are connected together by fasteners such as bolts and nuts.

The rails in the prior art are heavy in structure, and the installation process is cumbersome, and thus it is inconvenience to replace the rails, and the stability is poor. Moreover, although the mode of connection between the photovoltaic modules and the rails has a position-limiting effect, fracture of the photovoltaic modules is frequently caused by too much screwing force.

### SUMMARY OF THE UTILITY MODEL

An embodiment of the present disclosure discloses a slide-in rail for supporting a photovoltaic module and a mounting assembly of the photovoltaic module to solve the problems in the prior art, to improve the structure of the rail, and to avoid fracture of the photovoltaic module in the mounting process.

An embodiment of the present disclosure discloses a slide-in rail for supporting a photovoltaic module, including:
a fixing part; and
a clamping part, including:
a vertical plate, whose bottom end is fixed to a top surface of the fixing part; and
a transverse plate, transversely fixed to a top end of the vertical plate. The transverse plate, the vertical plate and the fixing part form a pair of clip slots opening in opposite directions. The clip slots are used for clipping to the photovoltaic module.

In the slide-in rail for supporting a photovoltaic module as mentioned above, alternatively, a sectional shape of the clip slot is symmetrical with respect to the vertical plate.

In the slide-in rail for supporting a photovoltaic module as mentioned above, alternatively, the transverse plate is parallel to the top surface of the fixing part.

In the slide-in rail for supporting a photovoltaic module as mentioned above, alternatively, materials of the fixing part, the vertical plate and the transverse plate are aluminium alloys.

In the slide-in rail for supporting a photovoltaic module as mentioned above, alternatively, a bottom of the fixing part is provided with a groove, and a top plate of the groove is connected to a building by way of a fastener and a support device.

An embodiment of the present disclosure further discloses a mounting assembly of a photovoltaic module, including at least one photovoltaic module, and further including the slide-in rail for supporting a photovoltaic module disclosed by the preceding embodiment. One end of the photovoltaic module is clipped into one clip slot of one slide-in rail, and the other end of the photovoltaic module is clipped into one clip slot of the other slide-in rail.

In the mounting assembly as mentioned above, alternatively, a width of the clip slot is not less than a thickness of the photovoltaic module, and a clearance between the clip slot and the photovoltaic module is not more than 1mm.

Alternatively, the mounting assembly as mentioned above further includes a separator strip, arranged in the clip slot and used for separating the clip slot from the photovoltaic module.

In the mounting assembly as mentioned above, alternatively, the separator strip is a PVC strip.

In the mounting assembly as mentioned above, alternatively, a section of the separator strip is shaped like an upward-narrowing groove.

In the slide-in rail for supporting a photovoltaic module and the mounting assembly of the photovoltaic module disclosed by the embodiment of the present disclosure, a clip slot is formed by the transverse plate and the vertical plate on the fixing part. The photovoltaic module may be directly mounted by way of cooperation between the clip slot and the photovoltaic module. The clip slot may limit the photovoltaic module. Therefore, the mounting time is saved. Furthermore, in the mounting process, it is unnecessary to apply excessive force to the photovoltaic module, and thus fracture of the photovoltaic module may be avoided.

### BRIEF DESCRIPTION OF THE DRAWING

FIG. 1 is a schematic structural diagram of a slide-in rail for supporting a photovoltaic module according to an embodiment of the present disclosure;
FIG. 2 is a sectional drawing of the slide-in rail for supporting a photovoltaic module according to the embodiment of the present disclosure;
FIG. 3 is a schematic structural diagram of a separator strip; and
FIG. 4 is a structural sectional diagram of the separator strip.

### Reference numbers in the attached drawings:

fixing part 1, vertical plate 2, transverse plate 3, clip slot 4, groove 5, top plate 6, separator strip 7, bottom surface 71, and side surface 72.

### DETAILED DESCRIPTION OF THE EMBODIMENTS

Embodiments of the present disclosure are described in detail as below. Examples of the embodiments are as shown in drawings, in which same or similar reference numbers always represent same or similar elements or elements with same or similar functions. The embodiments described below with reference to the drawings are exemplary, not construed as limiting the present disclosure.

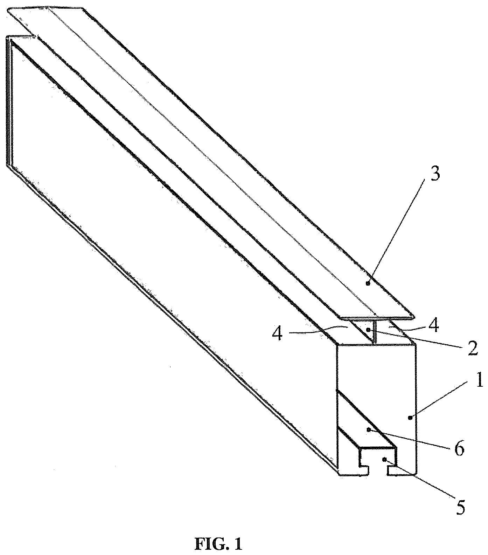

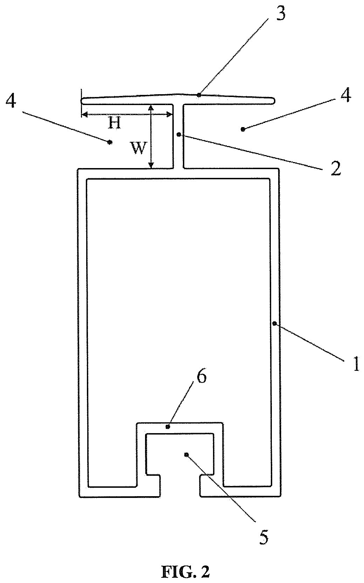

FIG. 1 is a schematic structural diagram of a slide-in rail for supporting a photovoltaic module according to an embodiment of the present disclosure, and FIG. 2 is a sectional drawing of the slide-in rail for supporting a photovoltaic module according to the embodiment of the present disclosure.

Simultaneously referring to FIG. 1 and FIG. 2, an embodiment of the present disclosure discloses a slide-in rail for supporting a photovoltaic module, including a fixing part 1 and a clamping part. The clamping part includes a vertical plate 2 and a transverse plate 3. The clamping part may serve as a slide-in rail to work in coordination with the photovoltaic module.

The fixing part 1 is used for connecting a fixture fixed to a building and also provides support for the vertical plate 2. The fixing part 1 may adopt aluminium alloy in the prior art, and both the vertical plate 2 and the transverse plate 3 may be made of aluminium alloy, such that light weight may be implemented while the strength is guaranteed. In this embodiment, the fixing part 1 is a square tube. It is to be understood that the fixing part 1 also may be of other shapes, which are not specifically limited herein.

Those skilled in the art also may understand that the mode of connection between the fixing part 1 and the fixture fixed to the building is the same as that in the prior art. That is, the fixing part 1 may be fixed to the fixture by screwing a fastener through the top plate 6 of the groove 5 on the fixing part 1.

The bottom end of the vertical plate 2 is fixed to the top surface of the fixing part 1. The vertical plate 2 may be fixed to the fixing part 1 by welding or in other ways. The top end of the vertical plate 2 is connected to the transverse plate 3. Specifically, the vertical plate 2 may be connected to a middle position of the transverse plate 3. The transverse plate 3, the vertical plate 2 and the top surface of the fixing part 1 form a pair of clip slots 4 opening in opposite directions. The clip slots 4 are used for clipping to the photovoltaic module.

Setting this pair of clip slots 4 opposite in open direction is because installation of one photovoltaic module needs a pair of slide-in rails for supporting a photovoltaic module disclosed by this embodiment. One end of the photovoltaic module is clipped into one clip slot of one slide-in rail for supporting a photovoltaic module, and the other end of the photovoltaic module is clipped into one clip slot of the other slide-in rail for supporting a photovoltaic module.

In the slide-in rail for supporting a photovoltaic module disclosed by the embodiment of the present disclosure, a clip slot is formed by the transverse plate and the vertical plate on the fixing part. The photovoltaic module may be directly mounted by way of cooperation between the clip slot and the photovoltaic module. The clip slot may limit the photovoltaic module. Therefore, the mounting time is saved. Furthermore, in the mounting process, it is unnecessary to apply excessive force to the photovoltaic module, and thus fracture of the photovoltaic module may be avoided.

Alternatively, a sectional shape of the clip slot 4 is symmetrical with respect to the vertical plate 2. That is, the clip slots 4 on the two sides of the vertical plate 2 have equal depth H, as shown in FIG. 2, such that the mounted photovoltaic module can be more stable, and thus it is avoidable that the photovoltaic module breaks away.

To further improve the installation stability of the photovoltaic module and prevent the photovoltaic module from breaking away from the clip slot 4, alternatively, the transverse plate 3 is parallel to the top surface of the fixing part 1. The vertical plate 2 is perpendicular to the transverse plate 3 and is connected between the transverse plate 3 and the top surface of the fixing part 1.

Based on the thickness dimension of the photovoltaic module, the width dimension W of the clip slot 4 may be set not less than the thickness of the photovoltaic module, such that it is avoidable that the photovoltaic module cannot slide into the clip slot 4. To ensure the clipping stability between the clip slot 4 and the photovoltaic module, the clearance between the clip slot 4 and the photovoltaic module is not more than 1mm.

An embodiment of the present disclosure further discloses a mounting assembly of a photovoltaic module, including at least one photovoltaic module, and further including at least one pair of slide-in rails for supporting a photovoltaic module disclosed by any embodiment of the present disclosure. One end of the photovoltaic module is clipped into one clip slot of one slide-in rail, and the other end of the photovoltaic module is clipped into one clip slot of the other slide-in rail.

To prevent the photovoltaic module from being damaged due to collision between the photovoltaic module and the slide-in rails for supporting a photovoltaic module, the mounting assembly for supporting a photovoltaic module disclosed by the embodiment of the present disclosure alternatively further includes a separator strip, which is arranged in the clip slot 4 and used for separating the clip slot 4 from the photovoltaic module, such that direct contact between the metal material of the clip slot 4 and glass on the photovoltaic module is avoided, and thus the photovoltaic module is protected. There may be multiple options for the material of the separator strip, as long as the material of the separator strip can separate the photovoltaic module from the clip slot 4. In this embodiment, the separator strip is a PVC strip.

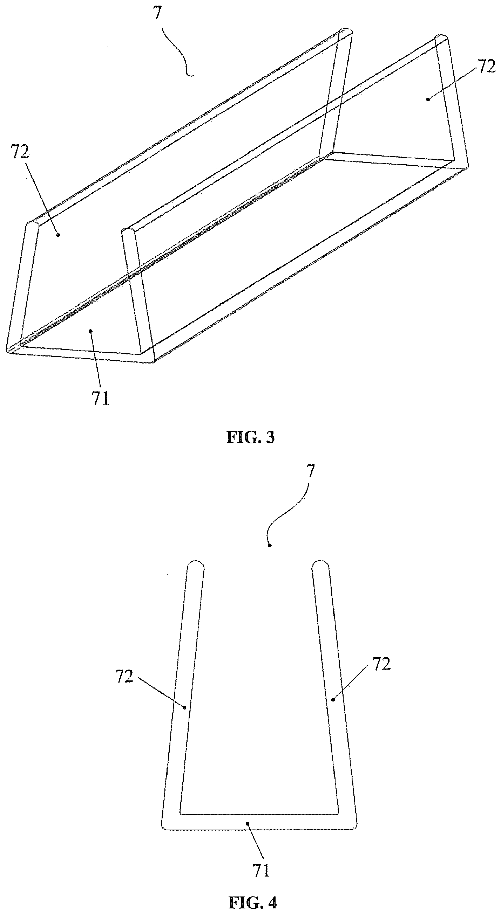

FIG. 3 is a schematic structural diagram of a separator strip, and FIG. 4 is a structural sectional diagram of the separator strip. Alternatively, the separator strip 7 includes a bottom surface 71 and two opposite side surfaces 72, such that the formed section of the separator strip 7 is shaped like an upward-narrowing groove. This narrowing shape can produce a clamping force to the photovoltaic module, such that the mounting reliability of the photovoltaic module is enhanced. Furthermore, the thickness of the separator strip 7 is adjustable to satisfy installation of photovoltaic modules of different sizes and eliminate the accumulated tolerance. Setting of the separator strip 7 also can provide a certain friction force, which makes the installation of the photovoltaic module more labor-saving.

The above embodiments as shown in the drawings illustrate the structure, the features and the effects of the slide-in rail for supporting a photovoltaic module in detail, and the above embodiments are merely preferred embodiments of the present disclosure. However, the embodiments of the present disclosure do not limit the scope of implementation according to what is shown in the figures. Any modifications made in accordance with the conception of the embodiments of the present disclosure or equivalent embodiments revised as equivalent changes shall fall within the scope of protection of the present disclosure as long as they are within the specification and the spirit covered by the drawings.

## Claims

1. A slide-in rail for supporting a photovoltaic module, comprising:
a fixing part;
a clamping part, comprising:
wherein a bottom end of vertical plate is fixed to a top surface of the fixing part; and
a transverse plate is transversely fixed to a top end of the vertical plate; the transverse plate, the vertical plate and the top surface of the fixing part forming a pair of clip slots opening in opposite directions; and the clip slots being used for clipping to the photovoltaic module.

2. The slide-in rail for supporting a photovoltaic module according to claim 1, wherein a sectional shape of the clip slots is symmetrical with respect to the vertical plate.

3. The slide-in rail for supporting a photovoltaic module according to claim 1 or 2, wherein the transverse plate is parallel to the top surface of the fixing part.

4. The slide-in rail for supporting a photovoltaic module according to claim 1 or 2, wherein materials of the fixing part, the vertical plate and the transverse plate are aluminium alloys.

5. The slide-in rail for supporting a photovoltaic module according to claim 1 or 2, wherein a bottom of the fixing part is provided with a groove, and a top plate of the groove is connected to a fixture on a building using a fastener.

6. A mounting assembly of a photovoltaic module, comprising at least one photovoltaic module, and further comprising at least one pair of slide-in rails for supporting a photovoltaic module according to any one of claims 1-5, one end of the photovoltaic module being clipped into one clip slot of one slide-in rail, and another end of the photovoltaic module being clipped into one clip slot of another slide-in rail.

7. The mounting assembly according to claim 6, wherein a width of the clip slot is not less than a thickness of the photovoltaic module, and a clearance between the clip slot and the photovoltaic module is not more than 1mm.

8. The mounting assembly according to claim 6 or 7, further comprising a separator strip, arranged in the clip slot and used for separating the clip slot from the photovoltaic module.

9. The mounting assembly according to claim 8, wherein the separator strip is a PVC strip.

10. The mounting assembly according to claim 9, wherein a section of the separator strip is shaped like an upward-narrowing groove.
